(19) Europäisches Patentamt
European Patent Office
Office européen des brevets

(11) **EP 2 937 927 A1**

(12) **EUROPEAN PATENT APPLICATION**

(43) Date of publication:
**28.10.2015 Bulletin 2015/44**

(51) Int Cl.:
***H01M 8/12*** $^{(2006.01)}$  ***C25B 11/04*** $^{(2006.01)}$
***H01M 4/86*** $^{(2006.01)}$  ***H01M 4/90*** $^{(2006.01)}$

(21) Application number: **15162811.2**

(22) Date of filing: **08.04.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **14.04.2014 JP 2014082460**

(71) Applicant: **Panasonic Intellectual Property
Management Co., Ltd.
Osaka-shi, Osaka 540-6207 (JP)**

(72) Inventors:
• **Kuroha, Tomohiro
  Osaka-shi, Osaka 540-6207 (JP)**
• **Hato, Kazuhito
  Osaka-shi, Osaka 540-6207 (JP)**
• **Kamata, Tomoya
  Osaka-shi, Osaka 540-6207 (JP)**

(74) Representative: **Grünecker Patent- und
Rechtsanwälte
PartG mbB
Leopoldstraße 4
80802 München (DE)**

(54) **Solid oxide fuel cell and electrolysis device**

(57) The present invention provides a fuel cell comprising a cathode, an electrolyte membrane, and an anode. The electrolyte membrane is sandwiched between the cathode and the anode. The cathode is formed of a first proton conductor represented by the following chemical formula $A_a(B_bM_m)O_{3-x}$ (where A represents a divalent metal, B represents a tetravalent metal, M represents a trivalent metal, 2 (3-x) = 2a+4b+3m, b+m = 1, and x = (3-2a-b)/2) and a mixed ionic electronic conductor. The electrolyte membrane is formed of a second proton conductor represented by the following chemical formula $A'_{a'}(B'_{b'}M'_{m'}) O_{3-x'}$ (where A' represents a divalent metal, B' represents a tetravalent metal, M' represents a trivalent metal, 2 (3-x') = 2a'+4b'+3m', b'+m' = 1, and x' = (3-2a'-b')/2). The following mathematical formula $m \leq m'$ is satisfied. The the electric power generation efficiency is improved.

FIG. 1

EP 2 937 927 A1

Printed by Jouve, 75001 PARIS (FR)

**Description**

BACKGROUND

1. Technical Field

The present invention relates to a solid oxide fuel cell. The present invention also relates to an electrolysis device.

2. Description of the Related Art

An oxide ion conductor such as stabilized zirconia is widely used as an electrolyte material of a solid oxide fuel cell. The solid oxide fuel cell employing stabilized zirconia as the electrolyte material requires an operation temperature of not less than 700 degrees Celsius, since the oxide ion conductor has low ion conductivity with a decrease in the temperature.

A special and expensive heat-resistant metal is required as a metal material used for the solid oxide fuel cell due to a rise in the operation temperature of the solid oxide fuel cell. Furthermore, since a heat expansion difference between a cathode electrode (or an anode electrode) and an electrolyte membrane increases at the startup and the shutdown with the rise in the operation temperature, a crack occurs in the electrolyte membrane more easily. As just described, the rise in the operation temperature causes two problems that a cost for fabricating the solid oxide fuel cell increases and that the reliability of the solid oxide fuel cell is lowered. For this reason, in order to put the solid oxide fuel cell into practical use, it is required to operate the solid oxide fuel cell under a lower operation temperature.

In order to operate the solid oxide fuel cell under a lower temperature, required is at least one of a decrease in the thickness of an electrolyte membrane and an improvement of the material of the electrolyte. United States Patent No. 6,517,693 discloses that a proton conductor such as $BaZrCeMO_{3-\alpha}$ (M represents a metal) is used as an improved electrolyte material, and that the solid oxide fuel cell is operated under a lower temperature.

When such a proton conductor is used as a cathode to which oxygen is supplied, oxygen vacancies are substituted with oxygen under a high oxygen partial pressure to generate holes. For this reason, such a proton conductor is a p-type semiconductor.

SUMMARY

The present invention is a fuel cell comprising a cathode, an electrolyte membrane, and an anode, wherein the electrolyte membrane is sandwiched between the cathode and the anode;
the cathode is formed of a first proton conductor represented by the following chemical formula (I) and a mixed ionic electronic conductor:

$$A_{a(}B_bM_m{_)}O_{3-x} \qquad (I)$$

where

    A represents a divalent metal,
    B represents a tetravalent metal,
    M represents a trivalent metal,

$$2(3-x) = 2a+4b+3m,$$

$$b+m = 1,$$

and

$$x = (3-2a-b)/2;$$

the electrolyte membrane is formed of a second proton conductor represented by the following chemical formula (II):

$$A'_{a'}(B'_{b'}M'_{m'})O_{3-x'} \qquad (II)$$

where

A' represents a divalent metal,
B' represents a tetravalent metal,
M' represents a trivalent metal,
$2(3-x') = 2a'+4b'+3m'$,
$b'+m' = 1$, and
$x' = (3-2a'-b')/2$; and

the following mathematical formula (III) is satisfied:

$$m \leq m' \qquad (III).$$

In the solid oxide fuel cell according to the present invention, the holes generated in the cathode transfer easily to the electrolyte membrane due to effects of a potential difference and a concentration gradient. As a result, the holes generated in the cathode are prevented from being recombined with the electrons. For this reason, the electric power generation efficiency is improved.

BRIEF DESCRIPTION OF THE DRAWINGS

FIG. 1 shows a schematic cross-sectional view of a solid oxide fuel cell 14 according to a first embodiment.
FIG. 2 shows an energy band diagram of a first proton conductor formed of a p-type semiconductor contained in a cathode 11 and a second proton conductor of an electrolyte membrane 12 formed of a p-type semiconductor before the cathode 11 and the electrolyte membrane 12 form a junction.
FIG. 3 shows an energy band diagram of the first proton conductor formed of a p-type semiconductor contained in the cathode 11 and the second proton conductor of the electrolyte membrane 12 formed of a p-type semiconductor after the cathode 11 and the electrolyte membrane 12 have formed a junction.
FIG. 4 shows a schematic cross-sectional view of the solid oxide fuel cell 14 according to a second embodiment.
FIG. 5 shows an energy band diagram of the first proton conductor formed of a p-type semiconductor contained in the cathode 11 and the second proton conductor of the electrolyte membrane 12 formed of a p-type semiconductor after the cathode 11 and the electrolyte membrane 12 have formed a junction, in case where the value of m is greater than the value of m'.

DETAILED DESCRIPTION OF THE EMBODIMENTS

When a p-type semiconductor such as $BaZrCeMO_{3-\alpha}$ is used as an electrolyte membrane, the holes generated in the electrolyte recombine with electrons on the cathode. This causes problems of an electric loss and a decrease in electric power generation efficiency.

A purpose of the present invention is to prevent the holes generated in the cathode from recombining with the electrons on the cathode to improve the electric power generation efficiency, when a p-type semiconductor is used as the electrolyte membrane of the solid oxide fuel cell.

The embodiments of the present invention will be described below with reference to the drawings.

(First embodiment)

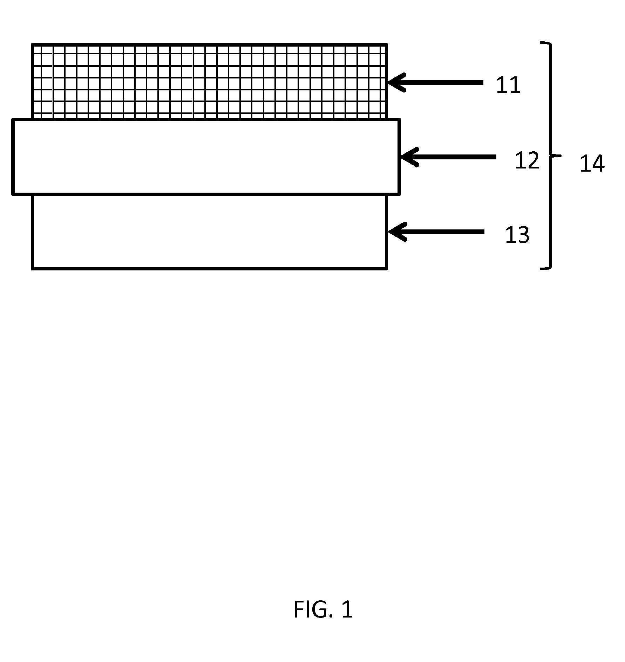

FIG. 1 shows a schematic cross-sectional view of a solid oxide fuel cell 14 according to the first embodiment.

The solid oxide fuel cell 14 comprises a cathode 11 having a shape of a layer, an electrolyte membrane 12, and an anode 13 having a shape of a layer. The electrolyte membrane 12 is sandwiched between the cathode 11 and the anode 13. The cathode 11 and the anode 13 are in contact with a front surface and a back surface of the electrolyte membrane 12, respectively. The electrolyte membrane 12 is formed of a p-type semiconductor material.

The cathode 11 is formed of a first proton conductor represented by the following chemical formula (I) and a mixed ionic electronic conductor.

$$A_{a(}B_b M_m)O_{3-x} \qquad\qquad (I)$$

where

A represents a divalent metal,
B represents a tetravalent metal,
M represents a trivalent metal,
$2(3-x) = 2a+4b+3m$,
$b+m = 1$, and

$$x = (3-2a-b)/2$$

More specifically, the cathode 11 is formed of a mixture of the first proton conductor and the mixed ionic electronic conductor. In this mixture, the number of three phase interfaces of oxygen, hydrogen ions, and electrons are increased. For this reason, such a mixture is desirable as the material of the cathode 11. As just described, it is desirable that the cathode 11 is formed of the first proton conductor and the mixed ionic electronic conductor. More desirably, the cathode 11 is formed of the mixture of the first proton conductor and the mixed ionic electronic conductor.

In the first proton conductor, part of the tetravalent metal B included in a perovskite compound represented stoichiometrically by the chemical formula $ABO_3$ (A represents a divalent metal and B represents a tetravalent metal) is substituted with the trivalent metal M. For this reason, the first proton conductor is one kind of p-type semiconductor. The specific materials of the first proton conductor will be described later.

Protons are capable of transferring in the inside of the first proton conductor. Oxide ions represented by the chemical formula $O^{2-}$ are also capable of transferring in the inside of the first proton conductor. However, the electrons fail to go through the first proton conductor. In case where the cathode 11 is formed only of the first proton conductor, such a cathode 11 would fail to receive electrons which have come from the anode 13. For this reason, the cathode 11 contains a mixed ionic electronic conductor as well as the first proton conductor. Not only ions but also electrons transfer in the inside of the mixed ionic electronic conductor. The mixed ionic electronic conductor allows the cathode 11 to receive the electrons which have come from the anode 13. An example of the mixed ionic electronic conductor is $LaSrCoFeO_3$, $LaSrMnO_3$, $LaSrCoO_3$, $LaSrFeO_3$, $LaNiO_3$, or $SmSrCoO_3$.

The electrolyte membrane 12 is formed of a second proton conductor represented by the following chemical formula (II).

$$A'_{a'(}B'_{b'}M'_{m')}O'_{3-x'} \qquad\qquad (II)$$

where

A' represents a divalent metal,
B' represents a tetravalent metal,
M' represents a trivalent metal,
$2(3-x') = 2a'+4b'+3m'$,
$b'+m' = 1$, and
$x' = (3-2a'-b')/2$

Desirably, the electrolyte membrane 12 is formed of the second proton conductor.

Needless to say, the values of a, b, m, x, a', b', m', and x' do not have to be completely identical to the values defined stoichiometrically as long as the open-circuit voltage is improved.

Similarly to the first proton conductor, the second proton conductor is also one kind of p-type semiconductor. Protons and oxide ions are also capable of transferring in the inside of the second proton conductor. The specific materials of the second proton conductor will be described later.

In the present invention, the following mathematical formula (III) is satisfied.

$$m \leq m' \quad (III)$$

In case where the value of m is greater than the value of m' as in the case of the comparative example 1, the voltage obtained from the solid oxide fuel cell is decreased. This will be described later in more detail.

In the first proton conductor, it is desirable that A is selected from the group consisting of barium, strontium, and calcium, that B is at least one element selected from the group consisting of zirconium, titanium, and cerium, and that M is selected from the group consisting of gadolinium, gallium, indium, yttrium, ytterbium, and scandium. Similarly, in the second proton conductor, it is desirable that A' is selected from the group consisting of barium, strontium, and calcium, that B' is at least one element selected from the group consisting of zirconium, titanium, and cerium, and that M' is selected from the group consisting of gadolinium, gallium, indium, yttrium, ytterbium, and scandium.

More desirably, A', B', and M' are identical to A, B, and M, respectively. In other words, the first proton conductor is formed of the same materials as the second proton conductor, except that only the composition ratios may be different. In this case, as long as the first proton conductor has the same crystal structure as the second proton conductor, the band levels of the valence band and the conduction band of the first proton conductor are substantially the same as the band levels of the valence band and the conduction band of the second proton conductor, respectively. As described later, the Fermi level 22 of the first proton conductor decreases with an increase in the composition ratio m of the trivalent metal M included in the first proton conductor. Similarly, the Fermi level 26 of the second proton conductor decreases with an increase in the composition ratio m' of the trivalent metal M' included in the second proton conductor. For this reason, simply changing the composition ratio m and/or the composition ratio m' allows the Fermi level 22 of the first proton conductor and the Fermi level 26 of the second proton conductor to be easily adjusted, in the case where A', B', and M' are identical to A, B, and M, respectively.

After a solid oxide fuel cell is operated for a long time, a heterologous substance which blocks ion conductivity or electronic conductivity may be formed. However, when A', B', and M' are identical to A, B, and M, respectively, concern of the generation of such a heterologous substance decreases. Also from such a viewpoint, it is desirable that A', B', and M' are identical to A, B, and M, respectively

A desirable first proton conductor is formed of $Ba_a(Zr_b M_m)O_{3-x}$. In other words, it is desirable that A is selected from barium and that B is selected from zirconium. In this case, it is desirable that the second proton conductor is also formed of $Ba_{a'}(Zr_{b'} M'_{m'})O_{3-x'}$. In other words, it is desirable that A' is also selected from barium and that B' is also selected from zirconium.

The first proton conductor may be formed of $Ba_a((ZrCe)_b M_m)O_{3-x}$ or $Ba_a((TiCe)_b M_m)O_{3-x}$. The second proton conductor may also be formed of $Ba_{a'}((ZrCe)_{b'} M'_{m'})O_{3-x'}$ or $Ba_{a'}((TiCe)_{b'} M'_{m'})O_{3-x'}$.

A more desirable first proton conductor is formed of $Ba_a(Zr_b In_m)O_{3-x}$ or $Ba_a(Zr_b Y_m)O_{3-x}$. In other words, it is desirable that M is selected from indium or yttrium. In this case, it is desirable that the second proton conductor is also formed of $Ba_{a'}(Zr_{b'} In_{m'})O_{3-x'}$ or $Ba_{a'}(Zr_{b'} Y_{m'})O_{3-x'}$. In other words, it is desirable that M' is also selected from indium or yttrium.

Most desirably, the first proton conductor is formed of $Ba_a(Zr_b In_m)O_{3-x}$ and the second proton conductor is formed of $Ba_{a'}(Zr_{b'} In_{m'})O_{3-x'}$.

Similarly to a cathode used for a conventional solid oxide fuel cell, the chemical reaction represented by the following chemical formula (IV) occurs in the cathode 11 according to the first embodiment.

$$O_2 + 4e- \rightarrow 2O^{2-} \qquad (IV)$$

The oxide ions $O^{2-}$ generated in this way transfer to the anode 13 through the electrolyte membrane 12.

The chemical reaction represented by the following chemical formula (V) occurs on the anode 13.

$$H_2 + v^{2-} \rightarrow H_2O + 2e^- \qquad (V)$$

The electrons generated in this way are extracted to the outside of the solid oxide fuel cell, and then return to the cathode 11.

As long as the chemical reaction represented by the chemical formula (V) occurs, a material of the anode 13 is not limited. Specifically, the material of the anode 13 is a mixture of the first proton conductor and nickel oxide. Platinum may be used as a material of the anode 13.

Similarly to a conventional solid oxide fuel cell, it is desirable that the cathode 11 and the anode 13 are porous. On the other hand, it is desirable that the electrolyte membrane 12 is a dense membrane.

Now, the present invention will be described theoretically.

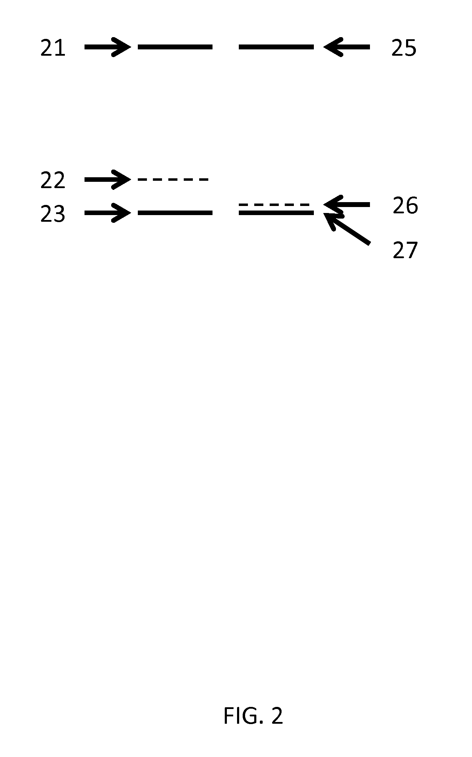

FIG. 2 shows an energy band diagram of a first proton conductor formed of a p-type semiconductor contained in the cathode 11 and a second proton conductor of the electrolyte membrane 12 formed of a p-type semiconductor in the first embodiment before the cathode 11 and the electrolyte membrane 12 form a junction.

The Fermi level 22 of the first proton conductor formed of a p-type semiconductor is higher than the Fermi level 26 of the second proton conductor formed of a p-type semiconductor. In other words, the Fermi level 22 of the first proton conductor is located at a higher energy level than the Fermi level 26 of the second proton conductor.

In FIG. 2, a conduction band 21 of the first proton conductor has the same energy level as a conduction band 25 of the second proton conductor. However, the conduction band 21 of the first proton conductor may have a different energy level from the conduction band 25 of the second proton conductor. Desirably, the conduction band 21 of the first proton conductor has the same energy level as the conduction band 25 of the second proton conductor.

A valence band 23 of the first proton conductor has the same energy level as a valence band 27 of the second proton conductor. In a conventional solid oxide fuel cell, since both the electrolyte membrane 12 and the cathode 11 are formed of an oxide, the valence band 23 of the first proton conductor and the valence band 27 of the second proton conductor are mainly composed of an O2p orbit of the oxide. For this reason, the energy level of the valence band 23 of the first proton conductor is substantially the same as the energy level of the valence band 27 of the second proton conductor.

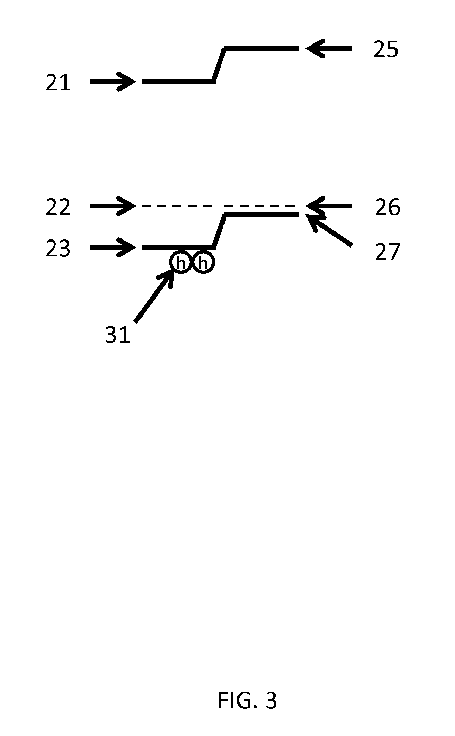

FIG. 3 shows an energy band diagram after the electrolyte membrane 12 and the cathode 11 have formed a junction.

After the junction has been formed, the Fermi level 22 of the first proton conductor is located at the same energy level as the Fermi level 26 of the second proton conductor. In conformity with this phenomenon, the conduction band 21 of the first proton conductor and the conduction band 25 of the second proton conductor are bent near the junction interface therebetween, and the band bending occurs. Similarly, the valence band 23 of the first proton conductor and the valence band 27 of the second proton conductor are bent near the junction interface therebetween, and the band bending occurs. As a result, the valence band 23 of the first proton conductor is located at a lower energy level than the valence band 27 of the second proton conductor.

As previously described, since the valence band 23 of the first proton conductor is located at substantially the same energy level as the valence band 27 of the second proton conductor, the valence band 23 of the first proton conductor and the valence band 27 of the second proton conductor form a junction near the junction interface therebetween without making a big energy barrier, as shown in FIG. 3.

For this reason, generated is a potential that holes 31 generated in the valence band 23 of the first proton conductor transfer to the energetically-stable valence band 27 of the second proton conductor forming the electrolyte membrane 12 having a low concentration of the holes.

This allows the probability of the recombination of the holes 31 generated in the first proton conductor with the electrons present in the cathode 11 to be decreased. For this reason, an electric loss due to the recombination of the electrons with the holes on the cathode 11 is reduced. As a result, the electric power generation efficiency is improved.

Hereinafter, the consideration of the problem which arises when the value of m is greater than the value of m' is made. The increase in the value of m (or m') means the increase in the content of the trivalent metal M (or M'). The amount of the oxygen vacancies increases with an increase in the content of the trivalent metal to maintain the electric neutrality in the crystal. The probability that oxygen defects in the crystal lattice of the proton conductor are filled with oxygen contained in a cathode gas such as air increases with an increase in the amount of the oxygen vacancies.

When the oxygen defects are filled, the holes are generated to maintain the electric neutrality in the crystal. For this reason, the amount of the generated holes increases with an increase in the oxygen vacancies. The increase in the amount of the holes causes the Fermi level of the p-type semiconductor to be brought closer to the valence band. In this way, the Fermi level is lowered with an increase in the composition ratio m (or m') of the trivalent metal such as indium.

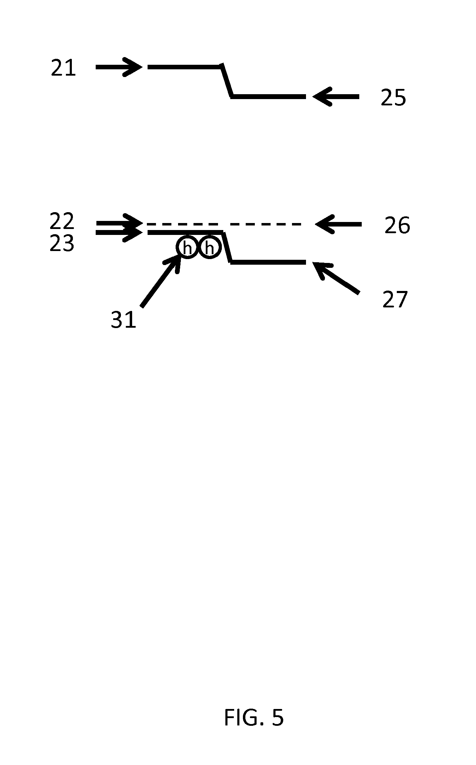

In case where the value of m is greater than the value of m', as shown in FIG. 5, after the cathode 11 and the electrolyte membrane 12 have formed a junction, the valence band 23 of the first proton conductor is located at a higher energy level than the valence band 27 of the second proton conductor. As is clear from FIG. 5, in this case, the holes 31 are accumulated in the cathode 11, and the recombination probability of the electrons and the holes is higher. For this reason, the electric power generation efficiency fails to be improved.

As just described, it is desirable that the energy difference between the Fermi level 22 and the valence band 23 of the first proton conductor is greater than the energy difference between the Fermi level 26 and the valence band 27 of the second proton conductor. Needless to say, it is desirable that the cathode 11 and the electrolyte membrane 12 form an ohmic contact.

Similarly to a conventional solid oxide fuel cell, the solid oxide fuel cell according to the first embodiment is also maintained at a temperature of 300 degrees Celsius - 1,100 degrees Celsius to generate electric power. Oxygen and a fuel are supplied to the cathode 11 and the anode 13, respectively. An example of the fuel is hydrogen. That is, the solid oxide fuel cell according to the first embodiment is prepared. In other words, a user of the solid oxide fuel cell get ready for the solid oxide fuel cell. Then, while the user maintains the temperature of the solid oxide fuel cell at a temperature of 300 degrees Celsius - 1,100 degrees Celsius, the user supplies oxygen and the fuel to the cathode 11 and the anode 13, respectively.

The device disclosed in the first embodiment is used as a fuel cell capable of extracting an electric power from hydrogen or an organic substance such as a methane gas. Such a device may also be used as an electrolysis device used to generate hydrogen by applying an electric energy to water or an organic substance such as a methane gas. In this case, the cathode of the fuel cell corresponds to an anode of the electrolysis device. Similarly, the anode of the fuel cell corresponds to the anode of the electrolysis device.

It is unnecessary that an interface between the first proton conductor and the second proton conductor is clear. The material composition may have a gradient.

As long as the relation between the first proton conductor and the second proton conductor is maintained, the first proton conductor may be a stacked structure of a plurality of proton conductor layers. Similarly, the second proton conductor may be a stacked structure of a plurality of proton conductor layers.

(Second embodiment)

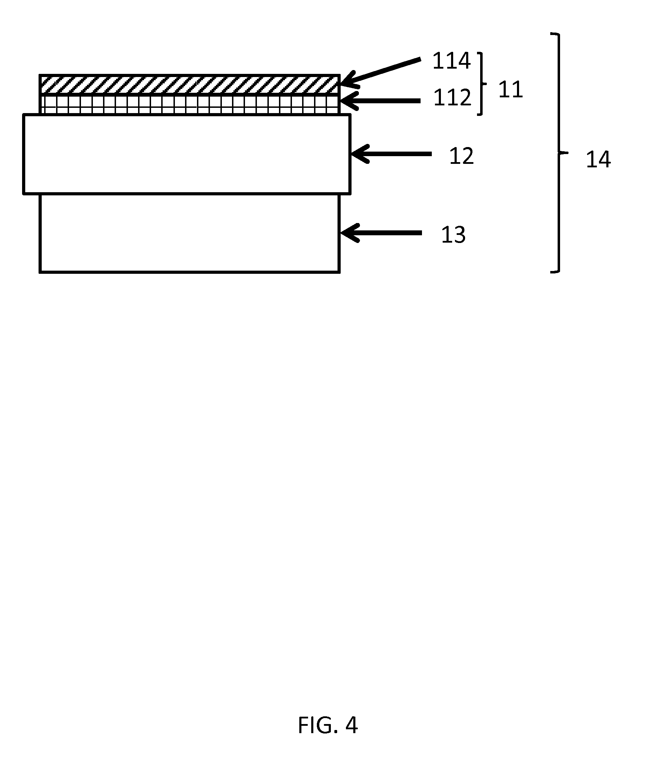

FIG. 4 shows a schematic cross-sectional view of the solid oxide fuel cell according to the second embodiment.

In the second embodiment, the cathode 11 having a shape of a layer is composed of a first layer 112 formed of the first proton conductor and a second layer 114 formed of the mixed ionic electronic conductor. The first layer 112 is sandwiched between the electrolyte membrane 12 and the second layer 114.

Also in the solid oxide fuel cell according to the second embodiment, similarly to the solid oxide fuel cell according to the first embodiment, the electric loss due to the recombination of the electrons with the holes on the cathode 11 is reduced, and the electric power generation efficiency is improved. Desirably, the first layer 112 has a thickness of not less than 1 micrometer and not more than 10 micrometers. Desirably, the second layer 114 has a thickness of not less than 50 micrometers and not more than 200 micrometers.

EXAMPLES

The present invention will be described below in more detail with reference to the following examples.

(Inventive Example 1)

A solid oxide fuel cell having the structure shown in FIG. 1 was fabricated. Specifically, the electrolyte membrane 12 was formed of a proton conductor represented by the composition formula $BaZr_{0.8}In_{0.2}O_{2.9}$. The proton conductor represented by the composition formula $BaZr_{0.8}In_{0.2}O_{2.9}$ was synthesized on the basis of United States Patent No. 6,517,693. The whole contents of United States Patent No. 6,517,693 are incorporated herein by reference. United States Patent No. 6,517,693 is substantially the same as Japanese Patent Publication No. 3,733,030.

The electrolyte membrane 12 had a thickness of approximately 500 micrometers. The electrolyte membrane 12 had a shape of a disk having a diameter of approximately 25 millimeters.

A mixture material for the cathode was prepared by mixing a proton conductor represented by the composition formula $BaZr_{0.9}In_{0.1}O_{2.95}$ (0.5 gram) with a mixed ionic electronic conductor represented by the composition formula $La_{0.6}Sr_{0.4}Co_{0.2}Fe_{0.8}O_3$ (0.5 gram, available from AGC SEIMI CHEMICAL Co. Ltd.). The proton conductor represented by the composition formula $BaZr_{0.9}In_{0.1}O_{2.95}$ was also synthesized on the basis of United States Patent No. 6,517,693.

A mixture material for the anode was prepared by mixing a proton conductor represented by the composition formula $BaZr_{0.8}In_{0.2}O_{2.9}$ (0.5 gram) with nickel oxide (0.5 gram).

The mixture material for the cathode was applied to the front surface of the electrolyte membrane 12 by a screen printing method. Then, the electrolyte membrane 12 was subjected to sintering under a temperature of 1,400 degrees Celsius. Subsequently, the mixture material for the anode was applied to the back surface of the electrolyte membrane 12 by a screen printing method. Then, the electrolyte membrane 12 was subjected to sintering under a temperature of 1,000 degrees Celsius to obtain the solid oxide fuel cell 14. Both the cathode 11 and the anode 13 had a diameter of 10 millimeters.

The obtained solid oxide fuel cell 14 was sandwiched between alumina pipes. Then, a gaseous mixture of hydrogen (volume ratio: 75%) and carbon dioxide (volume ratio: 25%) was supplied to the anode 13. Air was supplied to the cathode 11 at the same time. Both the gaseous mixture and the air had a flow rate of 40sccm. The temperature around the fuel cell 14 was controlled with a tubular furnace, and was maintained at 500 degrees Celsius.

A voltmeter was electrically connected between two platinum leads connected to the anode 13 and the cathode 11 to measure an open-circuit voltage.

(Inventive Example 2)

The solid oxide fuel cell 14 was fabricated similarly to the inventive example 1, except that a proton conductor represented by the composition formula $BaZr_{0.8}In_{0.2}O_{2.90}$ was used for the cathode 11 instead of the proton conductor represented by the composition formula $BaZr_{0.9}In_{0.1}O_{2.95}$.

(Inventive Example 3)

The solid oxide fuel cell 14 was fabricated similarly to the inventive example 1, except that a proton conductor represented by the composition formula $BaZr_{0.7}In_{0.3}O_{2.85}$ was used for the cathode 11 instead of the proton conductor represented by the composition formula $BaZr_{0.9}In_{0.1}O_{2.95}$.

(Comparative Example 1)

The solid oxide fuel cell 14 was fabricated similarly to the inventive example 1, except that the proton conductor represented by the composition formula $BaZr_{0.9}In_{0.1}O_{2.95}$ was not used for the cathode 11. In other words, the cathode 11 was formed only of the mixed ionic electronic conductor represented by the composition formula $La_{0.6}Sr_{0.4}Co_{0.2}Fe_{0.8}O_3$.

Table 1 shows the results of the measurement of the open-circuit voltage of the solid oxide fuel cells 14.

[Table 1]

| | First proton conductor contained in cathode 11 | m | Second proton conductor of electrolyte membrane 12 | Open circuit voltage (volt) |
|---|---|---|---|---|
| Inventive example 1 | $BaZr_{0.9}In_{0.1}O_{2.95}$ | 0.1 | $BaZr_{0.8}In_{0.2}O_{2.90}$ | 1.13 |
| Inventive example 2 | $BaZr_{0.8}In_{0.2}O_{2.90}$ | 0.2 | $BaZr_{0.8}In_{0.2}O_{2.90}$ | 1.11 |
| Inventive example 3 | $BaZr_{0.7}In_{0.3}O_{2.85}$ | 0.3 | $BaZr_{0.8}In_{0.2}O_{2.90}$ | 1.02 |
| Comparative example 1 | - | - | $BaZr_{0.8}In_{0.2}O_{2.90}$ | 1.02 |

The composition ratio of the metal atoms contained in the materials used in the inventive examples 1 - 3 and the comparative example 1 was measured by a high-frequency inductively coupled plasma atomic emission spectroscopy. The composition ratio of the oxygen required to maintain electric neutrality was calculated on the basis of the measured metal ratio. The composition ratio of oxygen shown in Table 1 is based on the calculation result.

In the inventive example 1 and the inventive example 2, the open-circuit voltage was 1.13 volts and 1.11 volts, respectively. These open-circuit voltages are higher than the one in the comparative example 1. However, the open-circuit voltage in the inventive example 3 was 1.02 volts. The open-circuit voltage in the inventive example 3 was much lower than the open-circuit voltages in the inventive examples 1 - 2, and same as the one in the comparative example 1.

As is clear from Table 1, when the composition ratio m of the trivalent metal M included in the first proton conductor contained in the cathode 11 is not more than the composition ratio m' of the trivalent metal M' included in the second proton conductor of the electrolyte membrane 12, the open-circuit voltage is high. On the other hand, when the composition ratio m is greater than the composition ratio m', the open-circuit voltage fails to be improved. For this reason, it is required to satisfy the mathematical formula (III) in order to improve the open-circuit voltage.

As is clear from the comparison of the inventive example 1 to the inventive example 2, it is desirable that the composition ratio m is smaller than the composition ratio m'. In other words, it is desirable that the first proton conductor contained in the cathode 11 has a higher Fermi level than the second proton conductor of the electrolyte membrane 12.

INDUSTRIAL APPLICABILITY

In the solid oxide fuel cell according to the present invention, the holes generated in the cathode transfer easily to the electrolyte membrane because of the effects of the potential difference and the concentration gradient. As a result, the holes generated in the cathode are prevented from being recombined with the electrons. For this reason, the electric power generation efficiency is improved.

REFERENCE SIGNS LIST

11    Cathode

| 112 | First layer |
|---|---|
| 114 | Second layer |
| 12 | Electrolyte membrane |
| 13 | Anode |
| 14 | Solid oxide fuel cell |
| 21 | Conduction band of first proton conductor |
| 22 | Fermi level of first proton conductor |
| 23 | Valence band of first proton conductor |
| 25 | Conduction band of second proton conductor |
| 26 | Fermi level of second proton conductor |
| 27 | Valence band of second proton conductor |
| 31 | Holes |

**Claims**

1. A fuel cell comprising:

   a cathode;
   an electrolyte membrane; and
   an anode, wherein
   the electrolyte membrane is sandwiched between the cathode and the anode;
   the cathode is formed of a first proton conductor represented by the following chemical formula (I) and a mixed ionic electronic conductor:

$$A_{a\,}(B_{b}M_{m})O_{3-x} \qquad (I)$$

   where

   A represents a divalent metal,
   B represents a tetravalent metal,
   M represents a trivalent metal,
   $2(3-x) = 2a+4b+3m$,
   $b+m = 1$, and
   $x = (3-2a-b)/2$;

   the electrolyte membrane is formed of a second proton conductor represented by the following chemical formula (II):

$$A'_{a'}(B'_{b'}M'_{m'})O_{3-x'} \qquad (II)$$

   where

   A' represents a divalent metal,
   B' represents a tetravalent metal,
   M' represents a trivalent metal,
   $2(3-x') = 2a'+4b'+3m'$,
   $b'+m' = 1$, and
   $x' = (3-2a'-b')/2$; and

   the following mathematical formula (III) is satisfied:

$$m \leq m' \qquad (III).$$

**2.** The fuel cell according to claim 1, wherein
an energy difference between a Fermi level and a valence band of the first proton conductor is greater than an energy difference between a Fermi level and a valence band of the second proton conductor, and
the cathode and the electrolyte membrane form an ohmic contact.

**3.** The fuel cell according to claim 1 or 2, wherein
the cathode is formed of a mixture of the first proton conductor and the mixed ionic electronic conductor.

**4.** The fuel cell according to any one of claims 1 to 3, wherein
the cathode is composed of
a first layer formed of the first proton conductor and
a second layer formed of the mixed ionic electronic conductor, and the first layer is sandwiched between the electrolyte membrane and the second layer.

**5.** A method for generating an electric power using a fuel cell, the method comprising:

(a) preparing the fuel cell comprising:

a cathode;
an electrolyte membrane; and
an anode, wherein
the electrolyte membrane is sandwiched between the cathode and the anode;
the cathode is formed of a first proton conductor represented by the following chemical formula (I) and a mixed ionic electronic conductor:

$$A_{a\,(}B_{b}M_{m)}O_{3-x} \qquad (I)$$

where

A represents a divalent metal,
B represents a tetravalent metal,
M represents a trivalent metal,
$2\,(3-x) = 2a+4b+3m$,
$b+m = 1$, and
$x = (3-2a-b)/2$;

the electrolyte membrane is formed of a second proton conductor represented by the following chemical formula (II):

$$A'_{a'(}B'_{b'}M'_{m')}O_{3-x'} \qquad (II)$$

where

A' represents a divalent metal,
B' represents a tetravalent metal,
M' represents a trivalent metal,
$2\,(3-x') = 2a'+4b'+3m'$,
$b'+m' = 1$, and
$x' = (3-2a'-b')/2$; and

the following mathematical formula (III) is satisfied:

$$m \leq m' \quad (III), \text{ and}$$

(b) supplying oxygen and a fuel, preferably hydrogen, to the cathode and the anode, respectively, to generate an electric power, while a temperature of the fuel cell is maintained at 300 degrees Celsius - 1100 degrees Celsius.

**6.** An electrolysis device comprising:

a cathode;
an electrolyte membrane; and
an anode, wherein
the electrolyte membrane is sandwiched between the cathode and the anode;
the anode is formed of a first proton conductor represented by the following chemical formula (I) and a mixed ionic electronic conductor:

$$A_a{_(}B_bM_m{_)}O_{3-x} \qquad (I)$$

where

A represents a divalent metal,
B represents a tetravalent metal,
M represents a trivalent metal,
$2(3-x) = 2a+4b+3m$,
$b+m = 1$, and
$x = (3-2a-b)/2$;

the electrolyte membrane is formed of a second proton conductor represented by the following chemical formula (II):

$$A'_{a'}{_(}B'_{b'}M'_{m'}{_)}O_{3-x'} \qquad (II)$$

where

A' represents a divalent metal,
B' represents a tetravalent metal,
M' represents a trivalent metal,
$2(3-x') = 2a'+4b'+3m'$,
$b'+m' = 1$, and
$x' = (3-2a'-b')/2$; and

the following mathematical formula (III) is satisfied:

$$m \leq m' \qquad (III).$$

7. The fuel cell according to any one of claims 1 to 4 or the electrolysis device according to claim 6, wherein
A is selected from the group consisting of barium, strontium, and calcium,
B is at least one selected from the group consisting of zirconium, titanium, and cerium,
M is selected from the group consisting of gadolinium, gallium, indium, yttrium, ytterbium, and scandium,
A' is selected from the group consisting of barium, strontium, and calcium,
B' is at least one selected from the group consisting of zirconium, titanium, and cerium, and
M' is selected from the group consisting of gadolinium, gallium, indium, yttrium, ytterbium, and scandium.

8. The fuel cell according to any one of claims 1 to 4 or 7 or the electrolysis device according to claim 6 or 7, wherein
A' is identical to A,
B' is identical to B, and
M' is identical to M.

9. The fuel cell according to any one of claims 1 to 4, 7 or 8 or the electrolysis device according to any one of claims 6 to 8, wherein
A is selected from barium,
B is selected from zirconium,
A' is selected from barium, and
B' is selected from zirconium.

10. The fuel cell according to any one of claims 1 to 4, 7 or 8 or the electrolysis device according to any one of claims 6 to 8, wherein
B is ZrCe or TiCe.

11. The fuel cell according to any one of claims 1 to 4, or 7 to 10 or the electrolysis device according to any one of claims 6 to 10, wherein
M is selected from indium or yttrium, and
M' is selected from indium or yttrium.

12. The fuel cell or the electrolysis device according to claim 11, wherein
M is selected from indium, and
M' is selected from indium.

13. The fuel cell according to any one of claims 1 to 4, or 7 to 12, or the electrolysis device according to any one of claims 6 to 12, wherein
the first proton conductor is a p-type semiconductor, and
the second proton conductor is a p-type semiconductor.

14. The electrolysis device according to any one of claims 6 to 13, wherein
an energy difference between a Fermi level and a valence band of the first proton conductor is greater than an energy difference between a Fermi level and a valence band of the second proton conductor, and
the anode and the electrolyte membrane form an ohmic contact.

15. The electrolysis device according to any one of claims 6 to 14, wherein
the anode is formed of a mixture of the first proton conductor and the mixed ionic electronic conductor.

16. The electrolysis device according to any one of claims 6 to 15, wherein
the anode is composed of
a first layer formed of the first proton conductor and
a second layer formed of the mixed ionic electronic conductor, and
the first layer is sandwiched between the electrolyte membrane and the second layer.

17. A method for generating hydrogen by electrolyzing water or an organic substance, the method comprising:

(a) preparing the electrolysis device comprising:

a cathode;
an electrolyte membrane; and
an anode, wherein
the electrolyte membrane is sandwiched between the cathode and the anode;
the anode is formed of a first proton conductor represented by the following chemical formula (I) and a mixed ionic electronic conductor:

$$A_{a(}B_bM_{m)}O_{3-x} \qquad (I)$$

where

A represents a divalent metal,
B represents a tetravalent metal,
M represents a trivalent metal,
$2(3-x) = 2a+4b+3m$,
$b+m = 1$, and
$x = (3-2a-b)/2$;

the electrolyte membrane is formed of a second proton conductor represented by the following chemical formula (II):

$$A'_{a'(}B'_{b'}M'_{m')}O_{3-x'} \qquad (II)$$

where

A' represents a divalent metal,
B' represents a tetravalent metal,
M' represents a trivalent metal,
$2(3-x') = 2a'+4b'+3m'$,
$b'+m' = 1$, and
$x' = (3-2a'-b')/2$; and

the following mathematical formula (III) is satisfied:

$$m \leq m' \qquad (III),$$

(b) supplying the water, preferably water vapor, or the organic substance which is in contact with the anode and the cathode; and
(c) electrolyzing the water or the organic substance by applying a potential difference between the anode and the cathode to generate hydrogen on the cathode.

FIG. 1

FIG. 2

21 →  25

22 →  26
23 →  27

31

FIG. 3

FIG. 4

21 → ⌐_

25 ←

22 ⇒
23

h h

31

26 ←

27

FIG. 5

Europäisches
Patentamt

European
Patent Office

Office européen
des brevets

# EUROPEAN SEARCH REPORT

Application Number

EP 15 16 2811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MA Q ET AL: "A high-performance ammonia-fueled solid oxide fuel cell", JOURNAL OF POWER SOURCES, ELSEVIER SA, CH, vol. 161, no. 1, 20 October 2006 (2006-10-20), pages 95-98, XP027938728, ISSN: 0378-7753 [retrieved on 2006-10-20] | 1-3,5,7, 8,13 | INV. H01M8/12 C25B11/04 H01M4/86 H01M4/90 |
| Y | * page 95 - page 96 * | 4,6,9, 14-17 | |
| | ----- | | |
| X | BI L ET AL: "Proton-conducting solid oxide fuel cells prepared by a single step co-firing process", JOURNAL OF POWER SOURCES, ELSEVIER SA, CH, vol. 191, no. 2, 15 June 2009 (2009-06-15) , pages 428-432, XP026100414, ISSN: 0378-7753, DOI: 10.1016/J.JPOWSOUR.2009.02.049 [retrieved on 2009-03-03] | 1-3,5,7, 8,11-13 | |
| Y | * page 428 - page 429 * | 4,6,9, 14-17 | TECHNICAL FIELDS SEARCHED (IPC) |
| | ----- | | H01M C25B |
| X | WO 2013/048722 A1 (PHILLIPS 66 CO [US]; GEORGIA TECH RES INST [US]; LIU MINGFEI [US]; YAN) 4 April 2013 (2013-04-04) | 1-3,5,7, 8,10,13 | |
| Y | * paragraph [0059] - paragraph [0065] * * paragraph [0072] * | 4,6,9, 14-17 | |

-/--

The present search report has been drawn up for all claims

| Place of search | Date of completion of the search | Examiner |
|---|---|---|
| Munich | 11 September 2015 | Langouët, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 16 2811

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEI YANG ET AL: "A Novel Composite Cathode for Low-Temperature SOFCs Based on Oxide Proton Conductors", ADVANCED MATERIALS, vol. 20, no. 17, 23 July 2008 (2008-07-23), pages 3280-3283, XP055211418, ISSN: 0935-9648, DOI: 10.1002/adma.200702762 | 1-3,5,7, 8,10,11, 13 | |
| Y | * page 3280 *<br>* page 3282 * | 4,6,9, 14-17 | |
| Y | EP 2 166 601 A1 (DELPHI TECH INC [US]) 24 March 2010 (2010-03-24) * paragraph [0020] - paragraph [0027] * * figures 1,2 * | 4 | |
| Y | US 2013/209904 A1 (LIU MINGFEI [US] ET AL) 15 August 2013 (2013-08-15) * paragraphs [0003] - [0016] * * table 1 * | 9 | |
| Y | EP 2 194 597 A1 (UNIV DENMARK TECH DTU [DK]) 9 June 2010 (2010-06-09) * paragraph [0001] - paragraph [0007] * | 6,14-17 | TECHNICAL FIELDS SEARCHED (IPC) |

The present search report has been drawn up for all claims

| Place of search | Date of completion of the search | Examiner |
|---|---|---|
| Munich | 11 September 2015 | Langouët, Sylvain |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 16 2811

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2015

| Patent document cited in search report | | Publication date | Patent family member(s) | | Publication date |
|---|---|---|---|---|---|
| WO 2013048722 | A1 | 04-04-2013 | US | 2013196247 A1 | 01-08-2013 |
| | | | WO | 2013048722 A1 | 04-04-2013 |
| EP 2166601 | A1 | 24-03-2010 | DK | 2166601 T3 | 08-07-2013 |
| | | | EP | 2166601 A1 | 24-03-2010 |
| | | | US | 2010075194 A1 | 25-03-2010 |
| US 2013209904 | A1 | 15-08-2013 | US | 2013209904 A1 | 15-08-2013 |
| | | | WO | 2013048705 A1 | 04-04-2013 |
| EP 2194597 | A1 | 09-06-2010 | AU | 2009243474 A1 | 17-06-2010 |
| | | | CA | 2686846 A1 | 03-06-2010 |
| | | | CN | 101752586 A | 23-06-2010 |
| | | | DK | 2194597 T3 | 16-06-2014 |
| | | | EP | 2194597 A1 | 09-06-2010 |
| | | | ES | 2456821 T3 | 23-04-2014 |
| | | | JP | 5591526 B2 | 17-09-2014 |
| | | | JP | 2010177187 A | 12-08-2010 |
| | | | KR | 20100063667 A | 11-06-2010 |
| | | | RU | 2009144531 A | 10-06-2011 |
| | | | US | 2010136380 A1 | 03-06-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6517693 B

- JP 3733030 B